# EUROPÄISCHE PATENTSCHRIFT

(11) **EP 1 282 541 B1**
(45) Veröffentlichungstag und Bekanntmachung des Hinweises auf die Patenterteilung: **31.03.2004**
(21) Anmeldenummer: 01937840.5
(22) Anmeldetag: 17.05.2001
(51) Int. Cl.: B60R 21/20

(54) **INNENVERKLEIDUNG FÜR EIN KRAFTFAHRZEUGTEIL, INSBESONDERE FÜR EINEN HOLM ODER EINE SÄULE**
INTERIOR LINING FOR A MOTOR VEHICLE PART, ESPECIALLY FOR A BEAM OR A PILLAR
HABILLAGE INTERIEUR POUR UN ELEMENT DE VEHICULE AUTOMOBILE, NOTAMMENT POUR UN LONGERON OU UN MONTANT

(30) Priorität: 17.05.2000 AT 3622000
(43) Veröffentlichungstag der Anmeldung: 12.02.2003
(73) Patentinhaber: Intier Automotive Eybl GmbH, 2435 Ebergassing (AT); BMW AG, 80788 München (DE)
(72) Erfinder: GOLDENITS, Erich, A-7121 Weiden (AT); MARCZINYAS, Harald, A-2435 Ebergassing (AT); TSCHANK, Andreas, A-7000 Eisenstadt (AT); KALTSCHMIDT, Thilo, D-80937 München (DE)
(74) Vertreter: Vinazzer, Edith, Dipl.-Ing.
(86) Internationale Anmeldenummer: PCT/AT2001/000152
(87) Internationale Veröffentlichungsnummer: WO 2001/087674

(56) Entgegenhaltungen:
- DE-A- 10 004 210
- DE-A- 19 932 949
- DE-C- 19 729 979
- DE-U- 29 822 768

## Beschreibung

Die Erfindung betrifft eine Innenverkleidung für ein Kraftfahrzeugteil, insbesondere für einen Holm oder eine Säule, wobei entlang des Kraftfahrzeugteils zumindest ein Teil eines Airbag-Moduls eines Schutzsystems, insbesondere eines Kopfschutzsystems, im nicht aktivierten Zustand untergebracht ist.

Es ist beispielsweise bekannt, Fahrzeuge mit Seiten- und/oder Kopfairbags auszurüsten, die im Falle eines Seitencrashes mit einem anderen Fahrzeug oder im Falle eines Überschlages des Fahrzeuges den Aufprall der Passagiere im Bereich der seitlichen Rahmen der A-Säulen, B-Säulen oder C-Säulen der FahrzeugKarosserie dämpfen sollen. Derartige Airbags sind üblicherweise als Bestandteile von Airbag-Modulen im Fahrzeuginneren in durch Verkleidungsteile abgedeckten Hohlräumen untergebracht. Eine derartige Anordnung ist beispielsweise aus der DE-A-198 41 347 bekannt. Eine Innenverkleidung entsprechend dem Oberbegriff des Anspruch 1 ist aus der DE-A-298 22 768 bekannt.

Die Verkleidung für Fahrzeugteile, entlang weichen der Airbag untergebracht ist, soll optisch unauffällig gestaltet sein soll, für etwaige Wartungs- oder Reparaturarbeiten einen Zugang zum Airbag-Modul und zu anderen Komponenten gestatten und soll in einer entsprechenden Unfallsituation ein sicheres Austreten des sich entfaltenden Airbags gewährleisten und dabei selbst keine Verletzungsgefahr für die Fahrzeuginsassen darstellen.

Der Erfindung liegt daher die Aufgabe zu Grunde, eine Verkleidung, die diesen Anforderungen gerecht wird, zur Verfügung zu stellen.

Gelöst wird die gestellte Aufgabe erfindungsgemäß dadurch, dass die Verkleidung zumindest aus zwei Teilen besteht, von welchen das eine Verkleidungsteil das zweite Verkleidungsteil in einem Verbindungsbereich überdeckt, an dem die beiden Verkleidungsteile auf von außen nicht sichtbare Weise miteinander lösbar verbindbar sind, und wobei das überlappende Verkleidungsteil im Auslösefall des Airbags unter Lösen der Verbindung wegbewegbar ist.

Durch die Erfindung wird somit eine optisch unauffällige und gleichzeitig funktionelle Verkleidung, die obigen Anforderungen voll gerecht wird, zur Verfügung gestellt.

Bei einer bevorzugten Ausführungsform der Erfindung weist das überdeckende Verkleidungsteil einen durch eine Materialschwächung oder dergleichen im Auslösefall des Airbags definiert wegklappbaren Bereich auf. Diese Maßnahme ist vor allem bei vergleichsweise kleinen Verkleidungsteilen von Vorteil, um ein Absplittern von Verkleidungsteilchen im Auslösefall zu verhindern.

Die lösbare Verbindung zwischen den beiden Verkleidungsteilen wird insbesondere derart ausgeführt, dass das überdeckende Verkleidungsteil gegenüber dem zweiten Verkleidungsteil im Verbindungsbereich anhebbar ist, wobei das überdeckte Verkleidungsteil zumindest weitgehend unbeweglich mit dem Fahrzeug verbindbar ist.

Eine konstruktiv einfache und funktionssichere Variante der lösbaren Verbindung der Verkleidungsteile sieht vor, dass das überdeckte Verkleidungsteil im Überdeckungsbereich mit einer Anzahl von Rastöffnungen versehen ist, in welchen jeweils zumindest ein Rastteil des überdeckenden Verkleidungsteils lösbar einrastbar ist.

Die Verbindung soll ferner so ausgelegt sein, dass kein unbeabsichtigtes Lösen und auch kein Klappern der miteinander verbundenen Bauteile auftritt. Dazu ist es günstig, dass jedes Rastteil mit einem am unteren Randbereich der Rastöffnung abschützbaren Rasthaken versehen wird, dass neben dem Rastteil ein in die gleiche Rastöffnung eingreifender Zentrierzapfen vorgesehen ist oder dass in einer Rastöffnung zwei gegeneinander versetzte und unabhängig voneinander verformbare Rastteile verrastbar sind.

Bei bestimmten Anordnungen des Airbag-Moduls hinter den Verkleidungsteilen kann es von Vorteil sein, wenn an der Innenseite des überdeckenden Verkleidungsteils zumindest eine, insbesondere mehrere, Abweisrampe(n) angeordnet sind, die im Auslösefall den Airbag von den Verrastungsstellen der beiden Verkleidungsteile wegleiten. Die Abweisrampen verhindern einerseits ein Abreißen von Rastteilen und andererseits ein Einreißen oder Hängenbleiben des Airbags an den Rastteilen im Auslösefall.

Weitere Merkmale, Vorteile und Einzelheiten der Erfindung werden nun anhand der Zeichnung, die schematische Darstellungen mehrerer Ausführungsbeispiele enthält, näher beschrieben. Dabei zeigen
Fig. 1 eine erste Ausführungsform der Erfindung anhand einer Schnittdarstellung im Bereich einer C-Säule eines Kraftfahrzeuges,
Fig. 2 eine Ansicht auf die Verkleidung aus Fig. 1,
Fig. 3 und Fig. 4 je eine Schrägansicht der Rastelemente der in Fig. 1 und Fig. 2 dargestellten Ausführungsform, Fig. 3 in unverrasteter, Fig. 4 in verrasteter Lage,
Fig. 5 eine Schrägansicht der Rastelemente einer weiteren Ausführungsform der Erfindung und
Fig. 6 eine Schnittdarstellung der weiteren Ausführungsform der Erfindung.

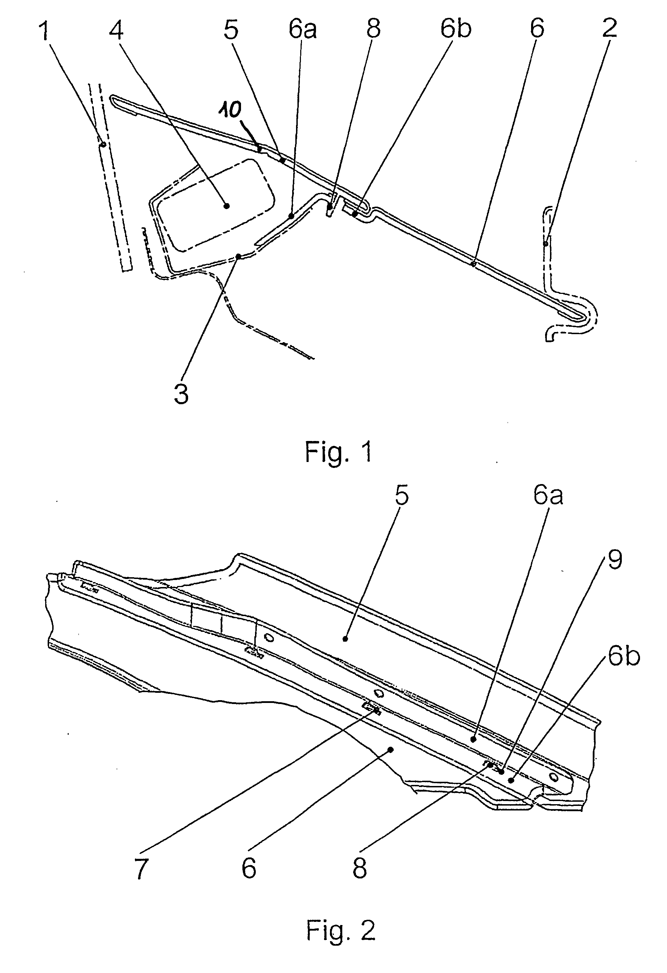

Die Erfindung wird beispielhaft anhand einer Verkleidung für eine so genannte C-Säule eines Kraftfahrzeuges erläutert. In Fig. 1 sind vom Fahrzeug die Heckscheibe 1 und die Hutablage 2 angedeutet. Angedeutet ist ferner das Airbag-Modul 4, welches in bekannter Weise aus einem aufblasbaren Airbag und einen Gasgenerator bestehen kann und ein Kopfschutzsystem für die Fahrzeuginsassen bildet. Ein derartiges Kopfschutzsystem wird üblicherweise an beiden Seiten des Kraftfahrzeuges, vorzugsweise jeweils von der A-Säule im Bereich der Frontscheibe bis zur C-Säule im Bereich der Heckscheibe reichend, untergebracht und im Bereich des Daches von der nicht dargestellten Dachinnenverkleidung und im Bereich der C-Säule von der in Fig. 1 gezeigten Verkleidung, die aus zwei Verkleidungsteilen 5, 6 besteht, verdeckt. Die beiden Verkleidungsteile 5, 6, die eine gewisse Verformbarkeit aufweisen, sind außenseitig mit einer Dekorschicht versehen und bestehen aus einem Kunststoff. In Fig. 1 ist das zur Befestigung des Airbag-Moduls 4 vorgesehene Blechteil 3 erkennbar. Um im Bereich der C-Säule in einer entsprechenden Unfallsituation den Austritt des Airbags und die gewünschte Airbagentfaltung zu gewährleisten und um bei Bedarf, beispielsweise im Reparaturfall, einen Zugang zu den hinter der Verkleidung befindlichen Komponenten zu ermöglichen, sind die beiden Verkleidungsteile 5, 6 auf eine lösbare Weise miteinander verbunden.

Das der Heckscheibe 1 näher gelegene Verkleidungsteil wird im Folgenden als rückwärtiges Verkleidungsteil 5, das zweite als vorderes Verkleidungsteil 6 bezeichnet. Die Zweiteilung der Verkleidung ist bei der dargestellten Ausführungsform im Wesentlichen entlang der Erstreckung der C-Säule vorgenommen, sodass die Verkleidungsteile 5, 6 im Wesentlichen gleich groß sind. Wie insbesondere Fig. 1 zeigt, ist die Ausgestaltung im Stoßbereich so getroffen, dass das rückwärtige Verkleidungsteil 5 das vordere hier überdeckt, sodass von außen lediglich eine Stoßstelle in der Form einer schmalen unauffälligen Nut zu sehen ist. Die beiden Verkleidungsteile 5, 6 sind an ihren dem Verbindungsbereich abgewandten Bereichen an mehreren Stellen auf nicht dargestellte Weise am Fahrzeug befestigt. Die Befestigung kann in bekannter Weise durch Verschrauben und/oder durch die Verwendung von Clipsen und dergleichen erfolgen. Wie aus Fig. 1 ersichtlich ist, geht das vordere Verkleidungsteil 6 am Stoßbereich über einen Doppelknick in einen nach innen versetzten Bereich 6b über, der vom rückwärtigen Verkleidungsteil 5 überdeckt wird. In der dargestellten Ausführungsform schließt am versetzten Bereich 6b über eine Abbiegung eine Rampe 6a an, mittels welchem das vordere Verkleidungsteil 6 nochmals an einem Fahrzeugblech, hier dem Blechteil 3, in nicht dargestellter Weise befestigt ist.

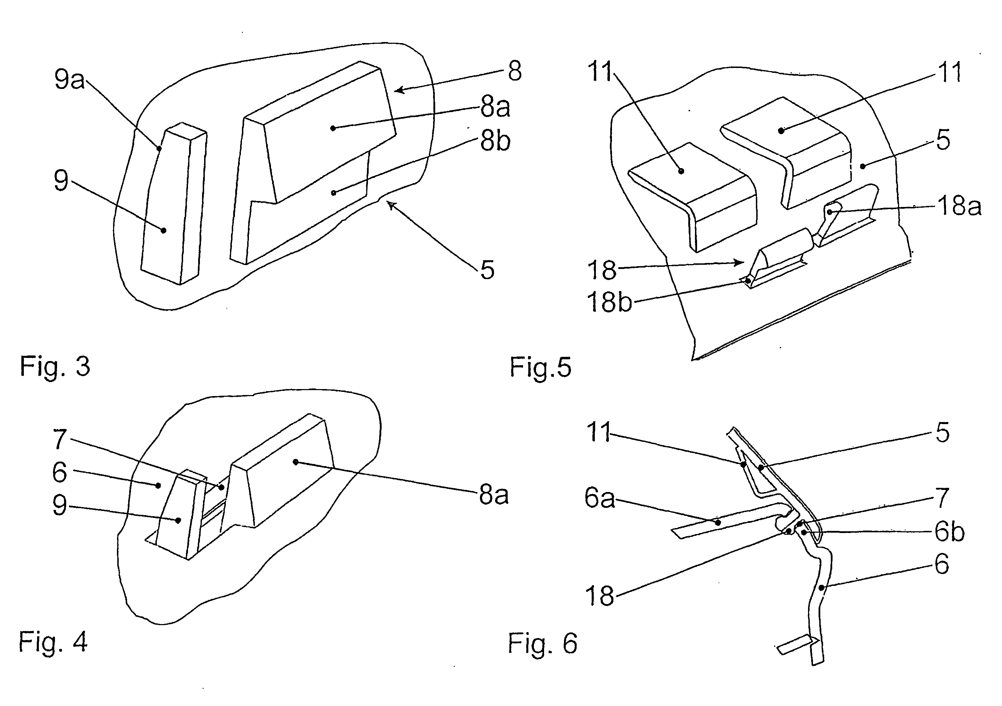

Über die Länge des nach innen versetzten Bereiches 6b des vorderen Verkleidungsteils 6 sind die beiden Verkleidungsteile 5, 6 an mehreren Stellen miteinander lösbar verrastet. An diesen Verrastungsstellen wirkt jeweils ein an der Innenseite des rückwärtigen Verkleidungsteils 5 vorgesehener Rastteil 8 mit einer am vorderen Verkleidungsteil 6 ausgebildeten Rastöffnung 7 zusammen. Die Rastöffnungen 7 sind rechteckförmig ausgeführt und in der Längsrichtung des versetzten Bereiches 6b des vorderen Verkleidungsteiles 6 ausgerichtet. Die Ausgestaltung des Rastteiles 8 ist insbesondere aus Fig. 3 ersichtlich. Das Rastteil 8 besteht aus einem Basisteil 8b und einem Rasthaken 8a, welcher, wie Fig. 4 zeigt, in der verrasteten Lage durch die Rastöffnung 7 geführt ist und das Verkleidungsteil 6 hier untergreift. Die Breite der Rastöffnung 7 ist derart gewählt, dass ein ungehindertes Einführen des Rastteiles 8 gewährleistet ist und somit auch der Bewegungsraum für ein Lösen des Rastteiles 8 zur Verfügung steht. Zum Zentrieren und Positionieren des Rastteiles 8 wirkt dieses mit einem in die gleiche Öffnung 7 wie dieses einführbaren Zentrierzapfen 9 zusammen. Jeder Zentrierzapfen 9 ist gegenüber dem zugehörigen Rastteil 8 derart versetzt und derart ausgestaltet, dass das Basisteil 8b des Rastteils 1 gemeinsam mit dem Zentrierzapfen 9 die Breite der Rastöffnung 7 zumindest im Wesentlichen einnimmt. In der Längsrichtung der Rastöffnung 7 gesehen sind der Zentrierzapfen 9 und das Rastteil 8 von einander etwas beabstandet, insbesondere derart, dass der Zentrierzapfen 9 an dem einen Ende und das Rastteil 8 am anderen Ende der rechteckförmigen Öffnung 7 positioniert sind. Der freie Endbereich des Zentrierzapfens 9 ist mit einer Abschrägung 9a versehen, die das Einführen in die Rastöffnung 7 erleichtert. Auch die in der verrasteten Lage das Verkleidungsteil 6 untergreifende bzw. am Rand der Öffnung 7 abstützbare Unterseite des Rasthakens 8a ist abgeschrägt, um ein etwaiges Lösen des Rastteils 8 beim willkürlichen Trennen der Verbindung der beiden Verkleidungsteile 5, 6 und ein Lösen der Verbindung beim Auslösen des Airbags zu ermöglichen.

Die Kombination von Zentrierzapfen 9 und Rastteilen 8 gewährleistet eine sichere, aber auch wieder lösbare Verbindung der beiden Verkleidungsteile 5, 6. Um, etwa für Reparaturzwecke, Zugang zu dem Bereich hinter den Verkleidungsteilen 5, 6 zu erhalten, können die Verrastungen durch ein Anheben des rückwärtigen Verkleidungsteils 5, was beispielsweise mittels eines Werkzeuges erfolgen kann, gelöst werden. Auf Grund seines Materials ist das rückwärtige Verkleidungsteil 5 ohne weiteres entsprechend verformbar.

Ein Lösen der Verbindungsstellen erfolgt auch bei einem Auslösen des Airbags in einer entsprechenden Unfallsituation. Zu diesem Zweck kann an der Innenseite des rückwärtigen Verkleidungsteils 5 über eine Materialschwächung, hier ist es eine Nut 10, eine definierte Scharnierstelle geschaffen werden, wo das rückwärtige Verkleidungsteil 5 im Auslösefall unter dem Druck des sich entfaltenden Airbags nach dem Aufreißen der Verbindungsstellen abknickt. Vorher lösen sich jedoch die beiden Verkleidungsteile 5, 6 an den Verbindungsstellen voneinander, wobei durch die Art der Verrastung zumindest weitgehend verhindert ist, dass die Rastteile 8 oder die Zentrierzapfen 9 abreißen oder abbrechen können.

Eine definierte Schamierstelle braucht insbesondere dann nicht vorgesehen zu werden, wenn die Verformbarkeit des Verkleidungsteils 5 ihr Wegbewegen bzw. Wegklappen im Auslösefall zulässt.

Eine weitere Ausführungsform von in den Rastöffnungen 7 des rückwärtigen Verkleidungsteils 5 verankerbaren Rastteilen 18 zeigt Fig. 5. Für jede Rastöffnung 7 im hier nicht gezeigten vorderen Verkleidungsteil 6 sind zwei insbesondere übereinstimmend ausgeführte, jedoch gegeneinander versetzte Rastteile 18 mit Rasthaken 18a vorgesehen. Die Basisteile 18b der Rasthaken 18 sind, in Richtung der Breite der Rastöffnungen 7 betrachtet, versetzt. Die in der Längsrichtung der Rastöffnungen 7 voneinander geringfügig beabstandeten Rastteile 18 untergreifen in der verrasteten Lage mit ihren Rasthaken 18a die in Längsrichtung verlaufenden unteren Ränder der Rastöffnungen 7 bzw. stützen sich dort ab. Auch bei dieser Ausführungsform weisen die Rasthaken 18a abgeschrägte Unterseiten auf, die ein willkürliches Lösen der Verrastung und ein Lösen der Verrastung im Auslösefall des Airbags ermöglichen. Zusätzlich sind bei dieser Ausführungsform an der Innenseite des rückwärtigen Verkleidungsteils 5 Abweisrampen 11 vorgesehen. Durch diese Abweisrampen 11 werden im Bereich vor den Rastteilen 18 Schrägflächen 11 a zur Verfügung gestellt, die eine gewisse Führung für den sich entfaltenden Airbag im Auslösefall bilden. Damit wird sichergestellt, dass der Airbag die Verrastungsstellen nicht derart beanspruchen kann, dass die Gefahr des Abreißens oder des Verbiegens der Rastteile 18 besteht, bevor sie aus den Öffnungen 7 austreten können. Darüber hinaus wird durch die Abweisrampen ein etwaiges Verhängen oder Einreißen des Airbags an den Rastteilen verhindert.

Die beiden Verkleidungsteile 5, 6 können nach einem so genannten Direktverfahren hergestellt werden. Dazu wird ein in eine entsprechende Form eingelegtes Dekormaterial, beispielsweise ein textiles Material, Kunstleder oder dergleiches, mit Kunststoff entweder hinterspritzt oder hinterpresst. Alternativ dazu können die beiden Verkleidungsteile 5, 6 vorerst als Kunststoffspritzgussteile gefertigt werden und anschließend mit Dekormaterial durch Kaschieren oder ein anderes Beschichtungsverfahren verbunden werden.

Die Erfindung ist auf die dargestellten und beschriebenen Ausführungsformen nicht eingeschränkt. Insbesondere ist es möglich, eine erfindungsgemäß ausgeführte Verkleidung aus mehr als zwei Teilen zu bilden und an anderen Innenteilen eines Fahrzeuges anzuordnen.

## Patentansprüche

1. Innenverkleidung für ein Kraftfahrzeugteil, insbesondere für einen Holm oder eine Säule, wobei entlang des Kraftfahrzeugteils zumindest ein Teil eines Airbag-Moduls eines Schutzsystems im nicht aktivierten Zustand untergebracht ist, wobei die Verkleidung zwei einander in einem Verbindungsbereich überdeckende Verkleidungsteile (5,6) aufweist, die im Verbindungsbereich auf von außen nicht sichtbare Weise miteinander lösbar verbunden sind, **dadurch gekennzeichnet, dass** das überdeckende Verkleidungsteil (5) im Auslösefall des Airbags unter Lösen der Verbindung wegbewegt wird,
das überdeckende Verkleidungsteil (5) gegenüber dem überdeckten Verkleidungsteil (6) im Verbindungsbereich anhebbar ist und das überdeckte Verkleidungsteil (6) zumindest weitgehend unbeweglich mit dem Fahrzeug verbunden ist.

2. Innenverkleidung nach Anspruch 1, **dadurch gekennzeichnet, dass** das überdeckende Verkleidungsteil (5) einen durch eine Materialschwächung oder dergleichen im Auslösefall definiert wegklappbaren Bereich aufweist.

3. Innenverkleidung nach Anspruch 1 oder 2, **dadurch gekennzeichnet, dass** das überdeckte Verkleidungsteil (6) im überdeckten Bereich mit einer Anzahl von Rastöffnungen (7) versehen ist, in welchen jeweils zumindest ein Rastteil (8, 18) des überdeckenden Verkleidungsteils (5) lösbar einrastbar ist.

4. Innenverkleidung nach einem der Ansprüche 1 bis 3, **dadurch gekennzeichnet, dass** jedes Rastteil (8, 18) mit einem am unteren Randbereich der Rastöffnung (7) abstützbaren Rasthaken (8a, 18a) versehen ist.

5. Innenverkleidung nach einem der Ansprüche 1 bis 4, **dadurch gekennzeichnet, dass** neben dem Rastteil (8) ein in die gleiche Rastöffnung (7) eingreifender Zentrierzapfen (9) vorgesehen ist.

6. Innenverkleidung nach einem der Ansprüche 1 bis 5, **dadurch gekennzeichnet, dass** in einer Rastöffnung (7) zwei gegeneinander versetzte und unabhängig voneinander verformbare Rastteile (18) verrastbar sind.

7. Innenverkleidung nach einem der Ansprüche 1 bis 6, **dadurch gekennzeichnet, dass** an der Innenseite des überdeckenden Verkleidungsteils (5) zumindest eine, insbesondere mehrere, Abweisrampen (11) angeordnet sind, die im Auslösefall den Airbag von den Verrastungsstellen der beiden Verkleidungsteile (5, 6) weg leiten.

## Claims

1. An interior trim for a motor-vehicle part, especially for an upright or a pillar, whereby at least a part of an airbag module of a protective system is housed in the non-activated state along the motor-vehicle part, whereby the trim has two trim parts (5, 6) overlapping one another in a connection area, which trim parts are connected together detachably in the connection area in a manner not visible from the exterior,
**characterised in that**
the overlapping trim part (5) is moved away releasing the connection when the airbag is triggered, the overlapping trim part (5) is liftable in the connection area opposite the overlapped trim part (6) and the overlapped trim part (6) is connected with the vehicle at least for the most part immovably.

2. The interior trim according to claim 1, **characterised in that** the overlapping trim part (5) has an area that can be folded away in a manner defined by a material weakness or suchlike in the event of triggering.

3. The interior trim according to claim 1 or 2, **characterised in that** the overlapped trim part (6) is provided in the overlapped area with a number of latch openings (7), in which at least one latch part (8, 18) of the overlapping trim part (5) can respectively be latched detachably.

4. The interior trim according to any one of claims 1 to 3, **characterised in that** each latch part (8, 18) is provided with a latch hook (8a, 18a) able to rest on the lower edge zone of the latch opening (7).

5. The interior trim according to any one of claims 1 to 4, **characterised in that**, apart from the latch part (8), a centring pin (9) engaging in the same latch opening (7) is provided.

6. The interior trim according to any one of claims 1 to 5, **characterised in that** two latch parts (18) offset with respect to one another and deformable independently of one another can be latched in a latch opening (7).

7. The interior trim according to any one of claims 1 to 6, **characterised in that** there are arranged on the inside of the overlapping trim part (5) at least one, in particular several, deflection ramps (11), which in the event of triggering lead the airbag away from the latch positions of the two trim parts (5, 6).

## Revendications

1. Revêtement intérieur pour pièce de véhicule automobile, notamment pour longeron ou colonne, au moins une partie d'un module airbag d'un système de protection étant logé à l'état non activé le long de la pièce de véhicule automobile, le revêtement présentant deux pièces de revêtement (5, 6) se recouvrant l'une l'autre dans une zone de liaison, qui sont reliées l'une à l'autre de manière détachable dans la zone de liaison d'une manière non visible de l'extérieur, **caractérisé en ce qu'**en cas de déclenchement de l'airbag, la pièce de revêtement couvrante (5) s'éloigne en défaisant la liaison, que la pièce de revêtement couvrante (5) peut être relevée par rapport à la pièce de revêtement recouverte (6) dans la zone de liaison et que la pièce de revêtement recouverte (6) est reliée du moins dans une large mesure de manière stationnaire au véhicule.

2. Revêtement intérieur selon la revendication 1, **caractérisé en ce que** la pièce de revêtement couvrante (5) présente une zone rabattable de manière définie du fait d'un affaiblissement du matériau ou similaire en cas de déclenchement.

3. Revêtement intérieur selon la revendication 1 ou 2, **caractérisé en ce que** la pièce de revêtement recouverte (6) est pourvue, dans la zone recouverte,d'une série d'orifices d'enclenchement (7) dans lesquels peut s'enclencher respectivement au moins une pièce d'enclenchement (8, 18) de la pièce de revêtement couvrante (5).

4. Revêtement intérieur selon l'une quelconque des revendications 1 à 3, **caractérisé en ce que** chaque pièce d'enclenchement (8, 18) est pourvue d'un crochet d'enclenchement (8a, 18a) pouvant s'appuyer sur la zone périphérique inférieure de l'orifice d'enclenchement (7).

5. Revêtement intérieur selon l'une quelconque des revendications 1 à 4, **caractérisé en ce qu'**il est prévu, outre la pièce d'enclenchement (8), un goujon de centrage (9) s'engrenant dans le même orifice d'enclenchement (7).

6. Revêtement intérieur selon l'une quelconque des revendications 1 à 5, **caractérisé en ce que** deux pièces d'enclenchement (18) décalées l'une par rapport à l'autre et déformables indépendamment l'une de l'autre peuvent s'enclencher dans un orifice d'enclenchement (7).

7. Revêtement intérieur selon l'une quelconque des revendications 1 à 6, **caractérisé en ce que,** sur la face interne de la pièce de revêtement couvrante (5), sont disposées au moins une, en particulier plusieurs, rampes de renvoi (11) qui, en cas de déclenchement, dévient l'airbag des points d'enclenchement des deux pièces de revêtement (5, 6).
